# EUROPÄISCHE PATENTSCHRIFT

(11) **EP 2 984 710 B1**
(45) Veröffentlichungstag und Bekanntmachung des Hinweises auf die Patenterteilung: **18.05.2016**
(21) Anmeldenummer: 14714271.5
(22) Anmeldetag: 31.03.2014
(51) Int. Cl.: H01R 43/02, H01R 4/18, H01R 4/62, B23K 20/10, B23K 20/233, B23K 20/00

(54) **VERFAHREN ZUM VERBINDEN EINES ROHRKABELSCHUHS MIT EINER AUS ALUMINIUM HERGESTELLTEN LITZE**
METHOD FOR CONNECTING A TUBULAR CABLE LUG TO A STRAND PRODUCED FROM ALUMINIUM
PROCÉDÉ DE RACCORDEMENT D'UNE COSSE DE CÂBLE TUBULAIRE À UN CONDUCTEUR MULTIBRINS EN ALUMINIUM

(30) Priorität: 04.04.2013 DE 102013205975; 26.06.2013 DE 102013212331
(43) Veröffentlichungstag der Anmeldung: 17.02.2016
(73) Patentinhaber: Telsonic Holding AG, 9552 Bronschhofen (CH)
(72) Erfinder: REGENBERG, Claus, 90513 Zirndorf (DE)
(74) Vertreter: Gassner, Wolfgang
(86) Internationale Anmeldenummer: PCT/EP2014/056472
(87) Internationale Veröffentlichungsnummer: WO 2014/161823

(56) Entgegenhaltungen:
- EP-A1- 0 421 018
- EP-A1- 2 735 397
- WO-A1-2011/076515
- DE-B3-102007 026 707

## Beschreibung

Die Erfindung betrifft eine Verfahren zum Verbinden eines Rohrkabelschuhs nach dem Oberbegriff des Patentanspruchs 1.

Ein solches Verfahren ist aus der WO 2011/076515 A1 bekannt.

Die DE 10 2007 026 707 B3 offenbart ein Verfahren zum elektrisch leitenden Verbinden von Litzen mittels Ultraschallschweißen. Eine darin offenbarte Sonotrode weist eine Schweißfläche in Form eines offenen Trapezes auf. Ein Amboss weist eine flache Oberfläche auf.

Aus der WO 2010/057753 A1 ist ein Verfahren zum Verbinden eines aus einem Nichteisenmetall hergestellten Anschlussteils mit einer aus Aluminium hergestellten Litze bekannt. Dabei wird die Litze mit dem Anschlussteil mittels Ultraschallschweißen stoffschlüssig verbunden. Zur Vermeidung einer Kontaktkorrosion ist die Litze mit einem Dichtmittel versehen, welches beim Ultraschallschweißen schmilzt und Hohlräume zwischen den einzelnen Litzenadern ausfüllt. Bei dem Dichtmittel handelt es sich um einen Klebstoff. Das Dichtmittel soll ein Eindringen von Feuchtigkeit in den Kontaktbereich zwischen der Aluminiumlitze und dem Anschlussteil verhindern. In der Praxis hat sich allerdings gezeigt, dass die Dichtwirkung des vorgeschlagenen Dichtmittels nicht dauerhaft ist.

Die DE 11 2011 102 335 T5 offenbart ein Verfahren zum Verbinden einer Litze mit einem Rohrkabelschuh. Die Litze wird in den Rohrkabelschuh eingesteckt. Anschließend werden die Einzeldrähte der Litze mittels einer Heizvorrichtung innerhalb des Rohrkabelschuhs zum Schmelzen gebracht. Dann wird der Rohrkabelschuh von den Seiten her unter Druck gesetzt, so dass das geschmolzene Metall in Richtung einer Ummantelung der Litze gehoben wird. - Das Aufschmelzen der Litze ist energie- und zeitaufwändig.

Die WO 2012/008519 A1 offenbart ein Verfahren zum Verschweißen zweier flach aufeinanderliegender Metallbleche. Sowohl der Amboss als auch die Sonotrode weisen kammartige Erhebungen auf, welche beim Pressen der Sonotrode gegen den Amboss einander gegenüberliegen. Es kann damit ein besonders hoher Druck auf einen Bereich ausgeübt werden, welcher zwischen den Kämmen des Ambosses und den einander gegenüberliegenden Kämmen der Sonotrode sich befindet. Eine Verformung der miteinander zu verschweißenden Bleche wird bei dem bekannten Verfahren vermieden.

Aufgabe der Erfindung ist es, die Nachteile nach dem Stand der Technik zu beseitigen. Es soll insbesondere ein möglichst einfach und kostengünstig durchführbares Verfahren zum Verbinden eines aus einem Nichteisenmetall hergestellten Rohrkabelschuhs mit einer aus Aluminium hergestellten Litze angegeben werden. Nach einem weiteren Ziel der Erfindung soll mit dem Verfahren ein Kontaktbereich zwischen der Litze und dem Rohrkabelschuh derart dicht verschweißbar sein, dass ein Eindringen von Feuchtigkeit dauerhaft verhindert wird.

Diese Aufgabe wird durch die Merkmale des Anspruchs 1 gelöst. Zweckmäßige Ausgestaltungen der Erfindung ergeben sich aus den Merkmalen der Ansprüche 2 bis 10.

Nach Maßgabe der Erfindung wird bei einem Verfahren zum Verbinden eines aus einem Nichteisenmetall hergestellten Rohrkabelschuhs mit einer aus Aluminium hergestellten Litze vorgeschlagen, dass die Sonotrode eine kammartig gekrümmte Druckfläche aufweist und der Amboss eine kammartig gekrümmte Gegendruckfläche aufweist.

Mit dem vorgeschlagenem Verfahren gelingt es auf überraschend einfache und kostengünstige Weise, eine aus Aluminium hergestellte Litze mit einem aus einem Nichteisenmetall hergestellten Rohrkabelschuh zu verbinden. Die Verbindung ist dabei derart, dass die Aluminiumlitze in einem Deformationsbereich zwischen der Druckfläche und der Gegendruckfläche in sich und mit dem umgebenden Rohrabschnitt dicht verschweißt wird. Durch den dicht verschweißten Abschnitt werden ein Eindringen von Feuchtigkeit in den Rohrabschnitt und somit eine Kontaktkorrosion dauerhaft vermieden. Die Herstellung der Verbindung kann mit dem erfindungsgemäßen Verfahren mit kurzen Taktzeiten und relativ geringem Energieaufwand erfolgen. Es ist insbesondere nicht erforderlich, zur Herstellung der Verbindung die Litze im Rohrabschnitt aufzuschmelzen.

Bei dem nach dem Stand der Technik bekannten Ultraschallschweißverfahren wird zum Verschweißen zweier Metallteile das eine Metallteil ortsfest auf dem Amboss fixiert. Das andere Metallteil wird dann bei gleichzeitiger Einkopplung von Ultraschallenergie gegen das eine Metallteil gedrückt. Die Herstellung einer dabei entstehenden Ultraschallschweißverbindung wird auf eine hochfrequente Bewegung des mit der Sonotrode angeregten anderen Metallteils relativ zu dem am Amboss fixierten einen Metallteil zurückgeführt. - Beim erfindungsgemäßen Verfahren wird die Ultraschallenergie dagegen in den fest mit dem Amboss verbundenen Rohrabschnitt eingekoppelt. Dennoch wird überraschenderweise ein Verschweißen zwischen der Litze und dem Rohrabschnitt erreicht. Bei der Herstellung der Schweißverbindung werden die Einzeldrähte der Litze lediglich oberflächlich miteinander verschweißt. Eine schmelzflüssige Phase entsteht dabei allenfalls in einem geringem Umfang von weniger als 20%, vorzugsweise weniger als 15%, besonders bevorzugt weniger als 10%, des durch den Rohrabschnitt definierten Volumens. Die schmelzflüssige Phase entsteht bevorzugt lediglich in einer Menge, welche ausreicht, um die Zwickelräume zwischen den Einzeldrähten der Litze im Bereich des Rohrabschnitts zu füllen.

Im Sinne der vorliegenden Erfindung wird unter einem "aus einem Nichteisenmetall hergestellten Rohrkabelschuh" ein Rohrkabelschuh verstanden, welcher z. B. aus Kupfer, Messing, Aluminium oder einer im Wesentlichen Kupfer, Messing oder Aluminium enthaltenden Legierung hergestellt ist. Desgleichen handelt es sich bei einer "aus Aluminium hergestellten Litze" um eine Litze, deren Einzeldrähte aus Aluminium oder einer im Wesentlichen Aluminium enthaltenden Legierung hergestellt sind. Der Rohrkabelschuh ist üblicherweise einstückig hergestellt. Ein vom Rohrabschnitt sich erstreckender Anschlussabschnitt ist üblicherweise in Form einer Platte ausgebildet, welche einen Durchbruch aufweisen kann.

Indem erfindungsgemäß sowohl die Druckfläche der Sonotrode als auch die gegenüberliegende Gegendruckfläche des Ambosses kammartig gekrümmt sind, wird der Druck zunächst über eine die höchsten Punkte der kammartigen Krümmung verbindende Kammlinie auf den Rohrabschnitt eingeleitet. Es wird damit im Rohrabschnitt sowohl gegenüberliegend der Druckfläche als auch gegenüberliegend der Gegendruckfläche eine weitgehend symmetrische Verformung erreicht. Mittels der über die kammartig gekrümmten Druck- und Gegendruckflächen eingekoppelten Ultraschallenergie wird ein plastisches Fliesen des den Rohrkabelschuh bildenden Werkstoffs sowie der von Rohrabschnitt umgebenen Litze unterstützt, so dass sich eine dichte Schweißverbindung innerhalb der Litze und zwischen der Litze und dem die Litze umgebenden deformierten Abschnitt des Rohrabschnitts ergibt.

Nach einer vorteilhaften Ausgestaltung sind eine erste Kammlinie der Druckfläche und eine zweite Kammlinie der Gegendruckfläche parallel zu einander ausgerichtet. Die erste und die zweite Kammlinie befinden sich ferner zweckmäßigerweise in einer Bewegungsebene, welche durch die Bewegung der ersten Kammlinie der Druckfläche beim Absenken der Sonotrode gegen den Amboss definiert ist. Damit kann eine besonders effektive Verformung des Rohrabschnitts und damit die Herstellung einer besonders dichten Schweißverbindung erreicht werden.

Zweckmäßigerweise sind die Druckfläche und/oder die Gegendruckfläche jeweils halbrund ausgebildet. Ein Radius der Druckfläche und/oder der Gegendruckfläche kann im Bereich zwischen 2 und 10 mm, vorzugsweise zwischen 3 und 8 mm, betragen. Die Ausgestaltung der Druck- und/oder Gegendruckfläche ist abhängig vom Durchmesser des Rohrabschnitts. Bei Rohrabschnitten mit einem kleinen Durchmesser wird für die Druck- und/oder Gegendruckfläche ein kleiner Radius gewählt. Die Druck- und/oder Gegendruckfläche kann/können im Profil auch trapezförmig ausgebildet sein. In diesem Fall sind die Kanten eines trapezförmig ausgestalteten Kamms gerundet.

Nach einer besonders vorteilhaften Ausgestaltung sind sowohl die Druck- als auch die Gegendruckfläche glatt ausgebildet. Indem insbesondere die den Amboss bildende Gegendruckfläche - in Abkehr vom Stand der Technik - glatt ausgebildet ist, wird in vorteilhafter Weise erreicht, dass bei der Herstellung der Verbindung zwischen dem Rohrkabelschuh und der Litze eine äußere Oberfläche des Rohrabschnitts - abgesehen von der durch die Druck- und/oder Gegendruckfläche bewirkten Verformung - unbeschädigt bleibt. Insbesondere bleibt eine auf einer äußeren Oberfläche des Rohrkabelschuhs vorgesehene Schicht, beispielsweise eine Nickel- oder Zinnschicht unbeschädigt. Damit eignet sich das erfindungsgemäße Verfahren hervorragend zur Verbindung von Litzen mit einem Rohrkabelschuh, dessen äußere Oberfläche mit einer Nickel- oder Zinnschicht überzogen ist.

Nach einer weiteren vorteilhaften Ausgestaltung wird die Ultraschallschwingung erst dann erzeugt, wenn der Rohrabschnitt um eine vorgegebene Eindrücktiefe verformt worden ist. Die vorgegebene Eindrücktiefe kann im Bereich von 0,5 bis 5,0 mm, vorzugsweise 2,0 bis 4,0 mm, betragen. Die Wahl der Eindrücktiefe hängt vom Durchmesser des Rohrabschnitts ab. Für einen Rohrabschnitt mit einem großen Außendurchmesser von beispielsweise 10 oder 12 mm wird beispielsweise eine Eindrücktiefe von 3 bis 4 mm gewählt. - Durch das Verformen des Rohrabschnitts um die vorgegebene Eindrücktiefe wird erreicht, dass die Litze im Rohrabschnitt klemmend gehalten wird. Beim nachfolgenden Einkoppeln von Ultraschallenergie kann es nicht mehr dazu kommen, dass die Litze durch die Ultraschallschwingung ihre axiale Lage innerhalb des Rohrabschnitts verändert.

Nach einer weiteren vorteilhaften Ausgestaltung wird bei der Herstellung der Verbindung auf den Rohrabschnitt ein vorgegebener Maximaldruck ausgeübt. Die Wahl des Maximaldrucks hängt wiederum vom Durchmesser des Rohrabschnitts sowie von dessen Wandstärke ab. Der Maximaldruck wird so gewählt, dass eine dichte Verschweißung mit der Litze erreicht und - abgesehen von der Verformung des Rohrabschnitts - keine Beschädigung desselben, z. B. eine Rissbildung und dgl., bewirkt wird.

Nach einer weiteren vorteilhaften Ausgestaltung wird als Sonotrode eine Torsionssonotrode verwendet, an deren Umfang die Druckfläche derart angebracht ist, dass die erste Kammachse etwa senkrecht zu einer Torsionsachse der Torsionssonotrode verläuft. Eine solche Torsionssonotrode ist beispielsweise aus der DE 10 2010 029 395 A1 bekannt. Der Offenbarungsgehalt dieses Dokuments wird hiermit eingezogen.

Bei der vorgeschlagenen Torsionssonotrode sind an deren Umfang in einander gegenüberliegender Anordnung zweckmäßigerweise zwei Druckflächen angebracht. Bei einem Verschleiß einer Druckfläche ist es möglich, die Torsionssonotrode um die Torsionsachse um 180° zu drehen und sodann mit der anderen Druckfläche weiter zu arbeiten. - Anstelle der vorgeschlagenen Torsionssonotrode ist es auch möglich, eine Longitudinalsonotrode zu verwenden. In diesem Fall verläuft die Kammlinie der Druckfläche parallel zur Schwingungsrichtung der Longitudinalsonotrode. Auch in diesem Fall ist die Kammlinie der Druckfläche etwa senkrecht zu Rohrachse des Rohrabschnitts gerichtet.

Nachfolgend wird ein Ausführungsbeispiel der Erfindung anhand der Zeichnung näher erläutert. Es zeigen:
- Fig. 1: eine Schnittansicht durch eine erfindungsgemäße Anordnung,
- Fig. 2: eine weitere Schnittansicht gemäß der Schnittlinie A-A in Fig. 1,
- Fig. 3: eine Schnittansicht durch die Anordnung gemäß Fig. 1 beim Herstellen einer Schweißverbindung mit einer Litze und
- Fig. 4: eine Schnittansicht durch einen Rohrkabelschuh mit einer damit verschweißten Litze.

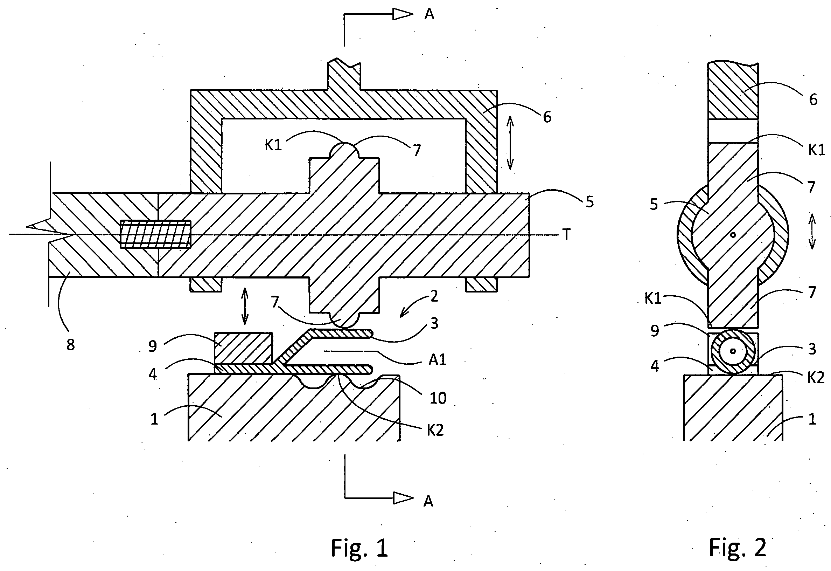

Bei der in den Fig. 1 bis 3 gezeigten Anordnung ist auf einem Amboss 1 ein allgemein mit dem Bezugszeichen 2 bezeichneter Rohrkabelschuh abgestützt. Der Rohrkabelschuh 2 weist einen Rohrabschnitt 3 und einen davon sich erstreckenden Anschlussabschnitt 4 auf. Mit dem Bezugszeichen A1 ist eine Rohrachse des Rohrabschnitts 3 bezeichnet. Der Anschlussabschnitt 4 ist vorteilhafterweise nach Art einer Platte ausgeführt, welche einen (hier nicht gezeigten) Durchbruch aufweist. Eine Torsionssonotrode 5 ist in einer vertikalen bewegbaren Druckeinrichtung 6 gehalten. Die Torsionssonotrode 5 weist zwei einander gegenüberliegende Druckflächen 7 auf, welche jeweils sattel- oder kammartig gekrümmt sind. Eine die höchsten Punkte der kammartigen Krümmung verbindende erste Kammlinie ist mit dem Bezugszeichen K1 bezeichnet. Sie ist - wie sich aus Fig. 2 ergibt - im gezeigten Ausführungsbeispiel geradlinig. Die erste Kammlinie K1 kann aber auch - in Anpassung an den Außendurchmesser des Rohrabschnitts 3 - konkav ausgestaltet sein.

Die Torsionssonotrode kann beispielsweise über einen Booster 8 mit einem hier nicht näher gezeigten Konverter verbunden sein, mit dem die Torsionssonotrode 5 in eine um eine mit dem Bezugszeichen T bezeichnete Torsionsachse in eine Torsionsschwingung versetzt werden kann. Mit dem Bezugszeichen 9 ist schematisch eine vertikal bewegbare Klemmeinrichtung bezeichnet, mit welcher der Anschlussabschnitt 4 klemmend am Amboss 1 gehalten werden kann. Die Klemmeinrichtung 9 kann insbesondere einen Zapfen aufweisen, welcher beim Klemmen des Anschlussabschnitts 4 einen darin vorgesehenen Durchbruch durchgreift. Damit ist es auch einfache Weise möglich, den Rohrkabelschuh 2 reproduzierbar in einer vorgegebenen Lage auf dem Amboss 1 klemmend zu befestigen.

Der Amboss 1 weist eine Gegendruckfläche 10 auf, welche sattel- oder kammartig gekrümmt ist. Eine zweite Kammlinie K2 verbindet die höchsten Punkte der kammartigen Krümmung der Gegendruckfläche 10. Wie insbesondere aus Fig. 2 ersichtlich ist, ist auch die zweite Kammlinie K2 im gezeigten Ausführungsbeispiel geradlinig ausgestaltet. Auch die zweite Kammlinie K2 kann eine konkave Krümmung aufweisen.

Sowohl die Druckfläche 7 als auch die Gegendruckfläche 10 können halbrund ausgestaltet sein. Ein Radius der beiden Flächen liegt zweckmäßigerweise im Bereich zwischen 3 und 8 mm, vorzugsweise 4 bis 6 mm.

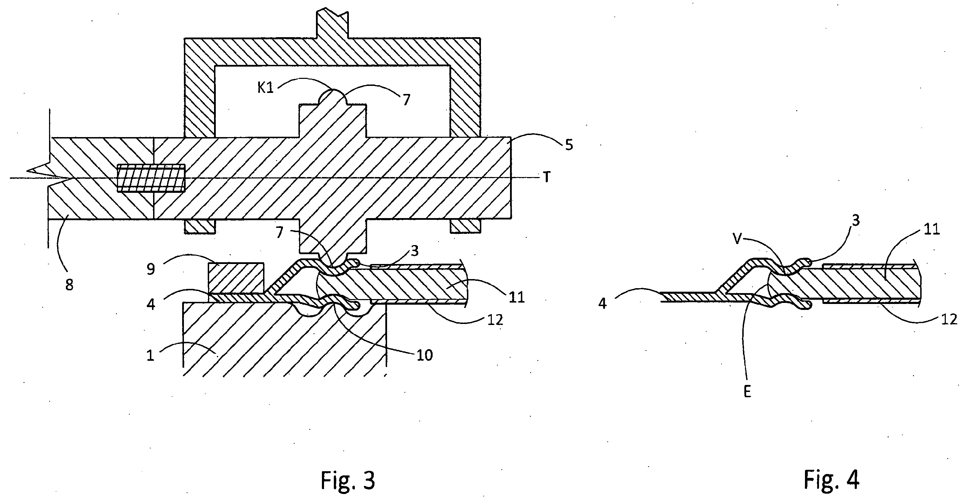

Die Funktion der Vorrichtung bzw. das damit ausführbare Verfahren wird nun in Zusammensicht mit den Fig. 3 und 4 näher erläutert.

Zunächst wird der Rohrkabelschuh 2 auf den Amboss 1 gelegt und mittels der Klemmeinrichtung 9 klemmend auf dem Amboss 1 befestigt. Dabei liegt ein unterer Abschnitt des Rohrabschnitts 3 an der, vorzugsweise genau einen, Gegendruckfläche 10, insbesondere der zweiten Kammlinie K2 der Gegendruckfläche 10, an. Sodann wird ein Ende E einer aus Aluminium hergestellten Litze 11 in den Rohrabschnitt 3 eingesteckt. Das Ende E ist frei von einer die Litze 11 umgebenden Isolierung 12.

Nachfolgend wird mit der elektrisch, pneumatisch oder hydraulisch bewegbaren Druckeinrichtung 6 die, vorzugsweise genau eine, Druckfläche 7 gegen den Rohrabschnitt 3 gedrückt, bis dieser sich um eine vorgegebene Eindrücktiefe verformt hat. Die vorgegebene Eindrücktiefe ist so gewählt, dass bei deren Erreichen die Litze 11 klemmend im verformten Rohrabschnitt 3 gehalten wird.

Sodann wird mittels der Torsionssonotrode 5 eine torsionale Ultraschallschwingung in den Rohrabschnitt 3 eingekoppelt und gleichzeitig mit der Druckeinrichtung 6 Druck auf den Rohrabschnitt 3 ausgeübt. Infolgedessen drücken sich die Konturen der Druckfläche 7 sowie der Gegendruckfläche 10 in den Rohrabschnitt 3 ein. In den Rohrabschnitt 3 wird Ultraschallenergie vorzugsweise mit einer vorgegebenen Leistung, eingekoppelt. Infolgedessen wird die Litze 11 im Abschnitt zwischen den einander gegenüberliegenden Druck- 7 und Gegendruckflächen 10 dicht verschweißt. Ein verschweißter Abschnitt der Litze 11 ist mit dem Bezugszeichen V bezeichnet.

Zum Verschweißen einer Litze mit einem Leitungsquerschnitt von 35 mm² mit einem Rohrkabelschuh, dessen Innendurchmesser etwa 8,5 mm beträgt wird eine vorgegebene Eindrücktiefe von etwa 3 mm sowie eine eingekoppelte Ultraschallleistung im Bereich von 2.000 bis 3.000 W, vorzugsweise 2.200 bis 2.800 W, verwendet. Eine auf die Torsionssonotrode 5 ausgeübte Kraft beträgt beispielsweise 3.000 bis 4.000 N, vorzugsweise 3.200 bis 3.700 N. Ein Radius der Druck- 7 sowie der Gegendruckfläche 10 beträgt in diesem Fall etwa 5 mm.

Sowohl die Druck- 7 als auch die Gegendruckfläche 10 sind glatt ausgebildet. Sie weisen keine Riffelung oder sonstige Mittel zum Eindrücken in eine Oberfläche des Rohrabschnitts 3 auf. Infolgedessen wird mit dem erfindungsgemäßen Verfahren eine ggf. auf den Rohrkabelschuh 2 vorgesehene Beschichtung, etwa eine Zinn- oder Nickelschicht, nicht beschädigt. Eine derartige Beschichtung weist üblicherweise eine Schichtdicke von 3 bis 20 µm auf.

In den Figuren sind der Rohrkabelschuh 2 und die Torsionssonotrode 5 so angeordnet, dass eine Schwingungsrichtung der Torsionssonotrode 5 etwa senkrecht zur Rohrachse A des Rohrkabelschuhs 2 verläuft. Es kann aber auch sein, dass die Torsionssonotrode 5 relativ zum Rohrkabelschuh 2 so angeordnet ist, dass die damit erzeugte Torsionsschwingung etwa parallel zur Rohrachse A des Rohrkabelschuhs 2 orientiert ist.

### Bezugszeichenliste:

- 1: Amboss
- 2: Rohrkabelschuh
- 3: Rohrabschnitt
- 4: Anschlussabschnitt
- 5: Torsionssonotrode
- 6: Druckeinrichtung
- 7: Druckfläche
- 8: Booster
- 9: Klemmeinrichtung
- 10: Gegendruckfläche
- 11: Litze
- 12: Isolierung

- A1: Rohrachse
- E: Ende
- K1: erste Kammlinie
- K2: zweite Kammlinie
- T: Torsionsachse
- V: verschweißter Abschnitt

## Patentansprüche

1. Verfahren zum Verbinden eines aus einem Nichteisenmetall hergestellten Rohrkabelschuhs (2) mit einer aus Aluminium hergestellten Litze (11) mit folgenden Schritten:
Bereitstellen eines Rohrkabelschuhs (2) mit einem Rohrabschnitt (3) und einem sich davon erstreckenden Anschlussabschnitt (4),
Bereitstellen einer Ultraschallschweißvorrichtung mit einer Sonotrode (5) und einem Amboss (1),
klemmendes Befestigen des Anschlussabschnitts (4) am Amboss (1), derart, dass der Rohrabschnitt (3) der Gegendruckfläche (10) des Ambosses (1) gegenüberliegt,
Einstecken eines Endes (E) der Litze (11) in den Rohrabschnitt (3) des Rohrkabelschuhs (2),
Inkontaktbringen der Druckfläche (7) mit dem Rohrabschnitt (3),
Drücken der Druckfläche (7) gegen den Rohrabschnitt (3), so dass der Rohrabschnitt (3) gegen die Gegendruckfläche (10) gezwungen wird, und
Erzeugen einer etwa senkrecht zu einer Rohrachse (A1) des Rohrabschnitts (3) gerichteten Ultraschallschwingung mittels der Sonotrode (5), derart, dass der Rohrabschnitt (3) verformt und die darin eingesteckte Aluminiumlitze (11) zumindest abschnittsweise verschweißt wird,
**dadurch gekennzeichnet,**
**dass** die Sonotrode (5) eine kammartig gekrümmte Druckfläche (7) aufweist und der Amboss (1) eine kammartig gekrümmte Gegendruckfläche (10) aufweist.

2. Verfahren nach Anspruch 1, wobei eine erste Kammlinie (K1) der Druckfläche (7) und eine zweite Kammlinie (K2) der Gegendruckfläche (10) parallel zueinander ausgerichtet sind.

3. Verfahren nach einem der vorhergehenden Ansprüche, wobei die Druckfläche (7) und/oder die Gegendruckfläche (10) jeweils halbrund ausgebildet sind.

4. Verfahren nach Anspruch 3, wobei ein Radius der Druckfläche (7) und/oder der Gegendruckfläche (10) im Bereich zwischen 2 und 10 mm, vorzugsweise zwischen 3 und 8 mm, beträgt.

5. Verfahren nach einem der vorhergehenden Ansprüche, wobei sowohl die Druck- (7) als auch die Gegendruckfläche (10) glatt ausgebildet sind.

6. Verfahren nach einem der vorhergehenden Ansprüche, wobei zumindest der Anschlussabschnitt (4) sowie eine äußere Oberfläche des Rohrkabelschuhs (2) mit einer Nickelschicht oder einer Zinnschicht überzogen sind.

7. Verfahren nach einem der vorhergehenden Ansprüche, wobei die Ultraschallschwingung erst dann erzeugt wird, wenn der Rohrabschnitt (3) um eine vorgegebene Eindrücktiefe verformt worden ist.

8. Verfahren nach einem der vorhergehenden Ansprüche, wobei die Eindrücktiefe 0,5 bis 5,0 mm, vorzugsweise 2,0 bis 4,0 mm, beträgt.

9. Verfahren nach einem der vorhergehenden Ansprüche, wobei auf den Rohrabschnitt (3) ein vorgegebener Maximaldruck ausgeübt wird.

10. Verfahren nach einem der vorhergehenden Ansprüche, wobei als Sonotrode eine Torsionssonotrode (5) verwendet wird, an deren Umfang die Druckfläche (7) derart angebracht ist, dass die erste Kammlinie (K1) etwa senkrecht zu einer Torsionsachse (T) der Torsionssonotrode (5) verläuft.

## Claims

1. A method for connecting a tubular cable lug (2) produced from a nonferrous metal to a strand (11) produced from aluminium, said method comprising the following steps:
providing a tubular cable lug (2) having a tubular portion (3) and a connecting portion (4) extending therefrom,
providing an ultrasonic welding device having a sonotrode (5) and an anvil (1),
securing the connecting portion (4) to the anvil (1) by clamping in such a way that the tubular portion (3) faces the mating pressure surface (10) of the anvil (1),
inserting one end (E) of the strand (11) into the tubular portion (3) of the tubular cable lug (2),
bringing the pressure surface (7) into contact with the tubular portion (3),
pressing the pressure surface (7) against the tubular portion (3) such that the tubular portion (3) is forced against the mating pressure surface (10), and
generating an ultrasound vibration oriented approximately perpendicular to a tube axis (A1) of the tubular portion (3) by means of the sonotrode (5), in such a way that the tubular portion (3) is deformed and the aluminium strand (11) inserted therein is welded at least in portions
**characterized in that**
the sonotrode (5) has a pressure surface (7) curved in a ridge-like manner and the anvil (1) has a mating pressure surface (10) curved in a ridge-like manner.

2. The method according to Claim 1, wherein a first ridge line (K1) of the pressure surface (7) and a second ridge line (K2) of the mating pressure surface (10) are oriented parallel to one another.

3. The method according to one of the preceding claims, wherein the pressure surface (7) and/or the mating pressure surface (10) are each semi-circular.

4. The method according to Claim 3, wherein a radius of the pressure surface (7) and/or of the mating pressure surface (10) is in the range between 2 and 10 mm, preferably between 3 and 8 mm.

5. The method according to one of the preceding claims, wherein both the pressure surface (7) and the mating pressure surface (10) are smooth.

6. The method according to one of the preceding claims, wherein at least the connection portion (4) and an outer surface of the tubular cable lug (2) are coated with a nickel layer or a tin layer.

7. The method according to one of the preceding claims, wherein the ultrasound vibration is only generated when the tubular portion (3) has been deformed by a predefined indentation depth.

8. The method according to one of the preceding claims, wherein the indentation depth is 0.5 to 5.0 mm, preferably 2.0 to 4.0 mm.

9. The method according to one of the preceding claims, wherein a predefined maximum pressure is exerted onto the tubular portion (3).

10. The method according to one of the preceding claims, wherein a torsion sonotrode (5) is used as sonotrode, at the periphery of which the pressure surface (7) is mounted in such a way that the first ridge line (K1) extends approximately perpendicular to a torsion axis (T) of the torsion sonotrode (5).

## Revendications

1. Procédé de raccordement d'une cosse de câble tubulaire (2) en métal non ferreux à un conducteur multibrin en aluminium (11), comprenant les étapes suivantes:
préparation d'une cosse de câble tubulaire (2) possédant un segment tubulaire (3) et un segment de connexion (4) s'étendant depuis celui-ci,
préparation d'un dispositif de soudage aux ultrasons équipé d'une sonotrode (5) et d'une enclume (1),
fixation serrée du segment de connexion (4) sur l'enclume (1) de telle façon que le segment tubulaire (3) se trouve en face de la surface de contre-pression (10) de l'enclume (1),
insertion d'une extrémité (E) du conducteur multibrin (11) dans le segment tubulaire (3) de la cosse de câble tubulaire (2),
mise en contact de la surface de pression (7) avec le segment tubulaire (3),
compression de la surface de pression (7) contre le segment tubulaire (3) de façon à plaquer le segment tubulaire (3) contre la surface de contre-pression (10), et
génération au moyen de la sonotrode (5) d'une vibration ultrasonore orientée approximativement perpendiculairement à un axe de tube (A1) du segment tubulaire (3) de façon à déformer le segment tubulaire (3) et souder au moins par segments le conducteur multibrin en aluminium (11) introduit dans celui-ci,
**caractérisé en ce que**
la sonotrode (5) présente une surface de pression (7) recourbée en forme de peigne et que l'enclume (1) présente une surface de contre-pression (10) recourbée en forme de peigne.

2. Procédé selon la revendication 1, en ce qu'une première ligne de peigne (K1) de la surface de pression (7) et une seconde ligne de peigne (K2) de la surface de contre-pression (10) sont alignées parallèlement l'une par rapport à l'autre.

3. Procédé selon l'une des revendications précédentes, en ce que la surface de pression (7) et/ou la surface de contre-pression (10) sont réalisés chacune de manière demi-ronde.

4. Procédé selon la revendication 3, en ce qu'un rayon de la surface de pression (7) et/ou de la surface de contre-pression (10) est compris dans une plage entre 2 et 10 mm, de préférence entre 3 et 8 mm.

5. Procédé selon l'une des revendications précédentes, en ce que tant la surface de pression (7) que la surface de contre-pression (10) sont réalisées de manière lisse.

6. Procédé selon l'une des revendications précédentes, en ce qu'au moins le segment de connexion (4) ainsi qu'une surface extérieure de la cosse de câble tubulaire (2) sont recouverts d'une couche de nickel ou une couche d'étain.

7. Procédé selon l'une des revendications précédentes, en ce que la vibration ultrasonore n'est générée que lorsque le segment tubulaire (3) a été déformé d'une profondeur de pénétration prédéfinie.

8. Procédé selon l'une des revendications précédentes, en ce que la profondeur de pénétration est de 0,5 à 5,0 mm, de préférence de 2,0 à 4,0 mm.

9. Procédé selon l'une des revendications précédentes, en ce qu'une pression maximale prédéfinie est exercée sur le segment tubulaire (3).

10. Procédé selon l'une des revendications précédentes, en ce qu'une sonotrode à torsion (5) est utilisée comme sonotrode, sur la périphérie de laquelle la surface de pression (7) est appliquée de telle façon que la première ligne de peigne (K1) est approximativement perpendiculaire à un axe de torsion (T) de la sonotrode à torsion (5).
